# EUROPEAN PATENT SPECIFICATION

(11) **EP 4 539 218 B1**
(45) Date of publication and mention of the grant of the patent: **23.09.2026**
(21) Application number: 24760552.0
(22) Date of filing: 21.02.2024
(51) Int. Cl.: H01M 50/183, H01M 50/557, H01M 50/105, B29C 65/00, B29C 65/18, H01M 50/178

(54) **SECONDARY BATTERY SEALING DEVICE**
VERSIEGELUNGSVORRICHTUNG FÜR SEKUNDÄRBATTERIE
DISPOSITIF D'ÉTANCHÉITÉ DE BATTERIE SECONDAIRE

(30) Priority: 21.02.2023 KR 20230022551
(43) Date of publication of application: 16.04.2025
(73) Proprietor: LG Energy Solution, Ltd., Seoul 07335 (KR)
(72) Inventor: LEE, Geon Hee, Daejeon 34122 (KR); LEE, Yoon Beom, Daejeon 34122 (KR)
(74) Representative: Goddar, Heinz J.
(86) International application number: PCT/KR2024/002207
(87) International publication number: WO 2024/177363

(56) References cited:
- WO-A1-2016/159607
- JP-A- 2006 099 970
- KR-A- 20120 126 932
- KR-A- 20150 071 918
- KR-A- 20210 058 159
- KR-B1- 102 077 273

## Description

### Technical Field

The present invention relates to a secondary battery sealing device capable of minimizing lead damage and lead heat loss during a sealing process of a pouch-type secondary battery.

This application claims the benefit of priority based on Korean Patent Application No. 10-2023-0022551 dated February 21, 2023.

### Background Art

Secondary batteries may be classified into coin-type secondary batteries, rectangular secondary batteries, cylindrical secondary batteries, and pouch-type secondary batteries, and the like, depending on the shape of the battery case.

Particularly, the pouch-type secondary battery has advantages of simple structure, high electric capacity per unit volume, low manufacturing cost, small weight, and easy shape change. Accordingly, recently, the pouch-type secondary batteries in which aluminum pouches are packaged in battery cells laminated with electrodes and separators have been widely used.

The pouch-type secondary battery is formed by performing slurry mixing, electrode (positive electrode material/negative electrode material) coating, electrode plate pressing, electrode plate slitting and electrode plate punching/notching, electrode plate drying, electrode plate lamination, electrode plate stacking, pouch packaging, electrolyte injection, formation, and pouch degassing processes in this order.

At this time, in the packaging process, an electrode assembly in which electrodes and separators are alternately laminated is packaged with a pouch, and when packaging the pouch, a pair of leads electrically connected to the electrodes of the electrode assembly is exposed to the outside of the pouch. Also, the packaging process comprises a sealing process for bonding of the pouch and the lead through a lead film.

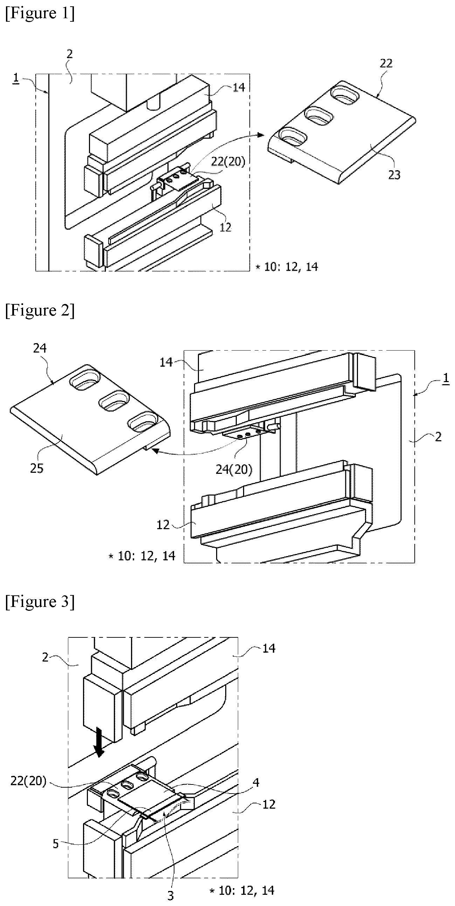

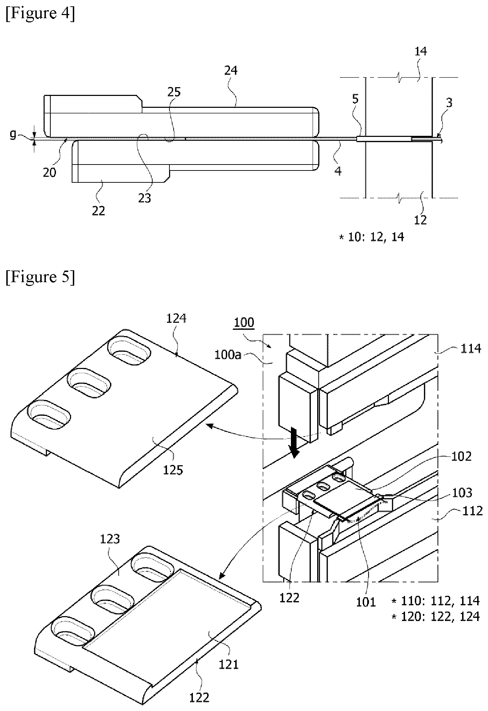

Figures 1 and 2 are diagrams for explaining conventional secondary battery sealing device and lead block, Figure 3 is a diagram for explaining a state where a lead of a battery cell is placed on the lead block shown in Figure 1, and Figure 4 is a diagram for explaining positions of a battery cell, a pair of sealing blocks, and a pair of lead blocks when a sealing process is performed using the conventional secondary battery sealing device shown in Figure 3.

Referring to Figures 1 to 4, the conventional secondary battery sealing device (1) comprises a main body (2), a pair of sealing blocks (10) provided on the main body (2) and for bonding a sealing target region of a battery cell (3), and a pair of lead blocks (20) provided on the pair of sealing blocks (10), respectively, and seated by the lead (4) of the battery cell (3) exposed to the outside of the pouch.

In this instance, on the lower side of the battery cell (3), a first sealing block (12) supporting the lower side of the battery cell (3) and seated by the battery cell (3), and a first lead block (22) provided on the first sealing block (12) so that the lead (4) of the battery cell (3) is seated are located. In addition, on the upper side of the battery cell (3), a second sealing block (14) for pressurizing the battery cell (3) seated on the first sealing block (12), and a second lead block (24) provided on the second sealing block (14) to cover the lead (4) of the battery cell (3) mounted on the lead block (22).

During the pouch sealing process, the heat applied to the first sealing block (12) and the second sealing block (14) is used to melt a sealant coated on a lead film (5) and the pouch (not shown), thereby sealing the lead (4) and the pouch. In the process of sealing the lead (4) and the pouch by the first sealing block (12) and the second sealing block (14), there is a problem that the lead film (5) made of a polypropylene material (PP) does not melt properly by the heat of the first sealing block (12) and the second sealing block (14) alone.

To solve such a problem, heating members (not shown) are also provided on the first sealing block (12) and the second sealing block (14), as well as the first lead block (22) and the second lead block (24), and heat is applied to the first lead block (22) and the second lead block (24). Then, the lead (4) disposed between the first lead block (22) and the second lead block (24) and the lead film connected to the lead (4) also have a certain degree of heat.

When the battery cell (3) is pressurized in this state by the first sealing block (12) and the second sealing block (14), the lead film (5) is well melted by the first sealing block (12), the second sealing block (14), and the first lead block (22) and the second lead block (24), so that it can be easy to seal the lead (4) and the pouch.

Meanwhile, when the battery cell (3) is pressurized by the first sealing block (12) and the second sealing block (14), the lead (4) seated on the opposing surface (23) of the first lead block (23) having one flat surface is in contact with the opposing surface (23) of the first lead block (22) and the opposing surface (25) of the second lead block (24), respectively. In this instance, the opposing surface (23) of the first lead block (22) and the opposing surface (25) of the second lead block (24) have a flat surface, so that the area in contact with the lead (4) increases, and there is a problem that damage such as scratches occurs on the outer surface of the lead (4).

To solve such a problem, a method that the first lead block (22) and the second lead block (24) are not in direct contact with the lead (4), such as a method of wrapping an insulating tape around each of the first lead block (22) and the second lead block (24), has been used.

However, as a gap (g) is generated between the first lead block (22) and the second lead block (24) due to the insulating tape wound around each of the first lead block (22) and the second lead block (24), and the lead (4) is exposed to the atmosphere through the gap (g), there is a problem that heat loss of the lead (4) occurs.

In addition, if the first lead block (22) and the second lead block (24) are not in contact with the lead (4), there is a problem that the original function of the first lead block (22) and the second lead block (24) for supporting the lead (4) is deteriorated.

D1 (WO 2016/159607 A1 (LG CHEMICAL LTD [KR]) 6 October 2016 (2016-10-06)) provides a pouch-type secondary battery sealing apparatus capable of preventing leakage of electrolytic solution by completely sealing the lead so that the lead can always be located in the sealing groove. According to an aspect of the invention, there is provided a sealing apparatus for a pouch-type secondary battery, the sealing apparatus including upper and lower sealing blocks, Wherein a sealing groove is formed at a position corresponding to a lead of the pouch type secondary battery, and a lead guide for seating the lead in the sealing groove is provided in front of the sealing block.

### Disclosure

### Technical Problem

It is an object of the present invention to provide a secondary battery sealing device capable of preventing damage such as scratches to a lead due to contact with a lead block during a secondary battery sealing process.

Also, it is an object of the present invention to provide a secondary battery sealing device capable of preventing heat loss from a lead during a secondary battery sealing process.

### Technical Solution

To solve the above-described problem, according to one aspect of the present invention, a secondary battery sealing device according to claim 1, as a sealing device for bonding a pouch and a lead film of a battery cell, is provided, in which it comprises a pair of sealing blocks seated by a battery cell, and provided to pressurize bonding target regions of a pouch and a lead film of the seated battery cell, and a pair of lead blocks seated by the lead of the battery cell exposed to the outside of the pouch, and provided to cover the seated lead, wherein at least one lead block of the pair of lead blocks is provided with a recess part for receiving the lead.

Also, the pair of lead blocks may be provided so that the regions excluding the depressed portion are in contact with each other along the edge of the lead.

In addition, the width of the depressed portion may be more than or equal to the width of the lead.

Furthermore, the depth of the depressed portion may be more than or equal to the thickness of the lead.

Also, the pair of lead blocks may be provided to cover the seated lead when the pair of sealing blocks pressurizes the bonding target regions in a state where the lead is seated. As one example, each lead block may be provided on the pair of sealing blocks, respectively, and may be provided to be movable together with each sealing block.

In addition, when the lead is received in the depressed portion by the pair of lead blocks, the pair of lead blocks may be provided to be in surface contact with each other in at least some regions along the edge of the lead, excluding the region where the depressed portion is formed. In such a structure, as the pair of lead blocks comes into contact, the depressed portion may form a receiving space for the reed, and by confining heat within the receiving space, the heat of the reed may be prevented from being lost to the outside.

Furthermore, the pair of sealing blocks may comprise a first sealing block supporting the lower side of the battery cell so that the battery cell is seated, and a second sealing block pressurizing the battery cell seated on the first sealing block as it moves toward the first sealing block.

Also, the pair of lead blocks may comprise a first lead block coupled to the first sealing block so that the lead is seated when the battery cell is seated on the first sealing block, and a second lead block provided to cover the lead seated on the first lead block as the second sealing block moves toward the first sealing block.

In addition, the depressed portion may be provided in the first lead block.

Furthermore, the width of the depressed portion may be more than or equal to the width of the lead.

Also, the depth of the depressed portion may be more than or equal to the thickness of the lead.

In addition, when the lead is covered by the second lead block, the respective opposing surfaces of the first lead block and the second lead block may be provided to be in surface contact with each other along the edge of the lead, excluding the region where the depressed portion is formed.

Furthermore, the lead and the lead film exposed to one open surface of the depressed portion may be pressurized by the first and second sealing blocks. When the lead is covered by the second lead block, the depressed portion may have a structure in which one surface facing the pouch is open.

In addition, the depressed portion may be provided in each of the first lead block and the second lead block. In such a structure, the total depth of the depressed portion formed in each lead block may be more than or equal to the thickness of the lead.

### Advantageous Effects

As discussed above, the secondary battery sealing device related to one example of the present invention has the following effects.

During the sealing process of the secondary battery, the lead of the battery cell exposed to the outside of the pouch is covered, in a state of being inserted into the depressed portion formed in any one of the pair of lead blocks, by the other lead block. Accordingly, the portion of the lead exposed to the atmosphere is minimized, so that the heat loss from the lead can be minimized.

In addition, the lead is inserted into the depressed portion of any one lead block and then covered by the other lead block, so that the area in contact with the pair of lead blocks can be minimized, and appearance damage, such as scratches, of the lead can be reduced by the pair of lead blocks.

Particularly, damage such as scratches does not occur on the appearance of the lead, so that appearance defects of the lead can be improved.

### Description of Drawings

Figures 1 and 2 are diagrams for explaining a conventional secondary battery sealing device and a lead block.
Figure 3 is a diagram for explaining a state where a lead of a battery cell is placed on the lead block shown in Figure 1.
Figure 4 is a diagram for explaining positions of a battery cell, a pair of sealing blocks, and a pair of lead blocks when a sealing process is performed by the conventional secondary battery sealing device shown in Figure 3.
Figure 5 is diagrams enlarging and showing a secondary battery sealing device and a lead block according to one example of the present invention.
Figure 6 is a diagram showing a battery cell sealed by the secondary battery sealing device according to one example of the present invention shown in Figure 5.
Figure 7 is a diagram for explaining positions of a battery cell, a pair of sealing blocks, and a pair of lead blocks when a sealing process is performed by the secondary battery sealing device shown in Figure 5.
Figure 8 is a diagram showing a lead of a battery cell.
Figure 9 is a diagram showing a first lead block.

### Mode for Invention

Hereinafter, a secondary battery sealing device according to one example of the present invention will be described in detail with reference to the attached drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

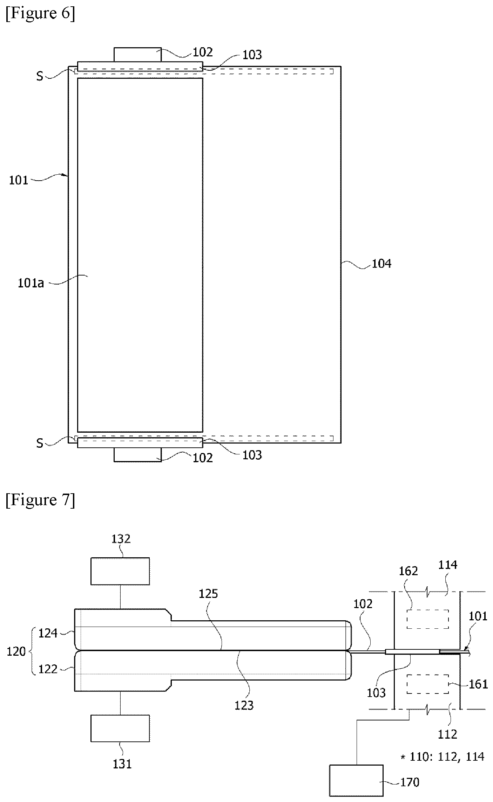

Figure 5 is diagrams enlarging and showing a secondary battery sealing device (100) and a lead block according to one example of the present invention, and Figure 6 is a diagram showing a battery cell (101) sealed by the secondary battery sealing device according to one example of the present invention shown in Figure 5.

The secondary battery sealing device (100) according to one example of the present invention may be used during a pouch packaging process performed between an electrode plate stacking process and an electrolyte injection process among the processes of manufacturing a pouch-type secondary battery.

Specifically, the secondary battery sealing device (100) is used in a sealing process for bonding a preset bonding target region (S) between the pouch (104) and the lead (102) of the battery cell (101) through the lead film (103) of the battery cell (101).

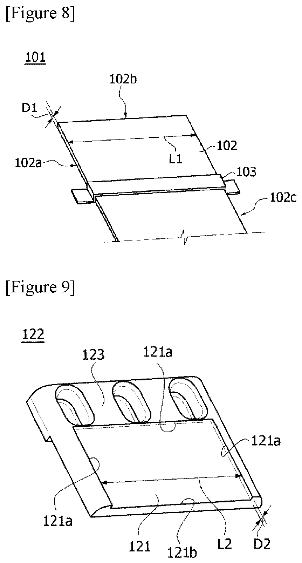

Figure 7 is a diagram for explaining positions of a battery cell, a pair of sealing blocks, and a pair of lead blocks when a sealing process is performed by the secondary battery sealing device shown in Figure 5; Figure 8 is a diagram showing a lead of a battery cell; and Figure 9 is a diagram showing a first lead block.

Referring to Figures 5 to 7, the secondary battery sealing device (100) according to one example of the present invention may comprise a pair of sealing blocks (110) pressurizing a battery cell (101), and a pair of lead blocks (120) provided in the pair of sealing blocks (110), respectively, seated by the lead (102) of the battery cell (101) exposed to the outside of the pouch, and covering the seated lead (102).

The pair of sealing blocks (110) is a part for thermally pressurizing the battery cell (101), which performs a function of thermally pressurizing the bonding target region (S) to seal the bonding target region (S).

Referring to Figures 6 and 7, the battery cell (101) may be a pouch-type secondary battery, and comprise an electrode laminate (101a) in which pluralities of electrodes and separators are alternately laminated, and a pouch (104) surrounding the electrode laminate (101a). At this time, the electrode laminate (101a) is received inside the pouch (104), and the pair of leads (102) provided at both ends of the electrode laminate (101a) is packed by the pouch (104) to be respectively exposed to the outside of the pouch (104).

The secondary battery sealing device (100) comprises a pair of sealing blocks (110) seated by the battery cell (101) and provided to pressurize the bonding target region (S) of the pouch (104) and the lead film (103) of the seated battery cell (101), and a pair of lead blocks (120) seated by the lead (102) of the battery cell (101) exposed to the outside of the pouch (104) and provided to cover the seated lead (102).

In addition, at least one of the pair of lead blocks (120) is provided with a depressed portion (121) for receiving the lead (102).

Here, the pair of sealing blocks (110) thermally pressurizes a preset bonding target region (S) between the pouch (104) and the lead (102) through the lead film (103).

The pair of sealing blocks (110) may comprise a first sealing block (112) and a second sealing block (114). The first sealing block (112) and the second sealing block (114) may be provided at a predetermined interval from each other in the vertical direction of the main body (100a) of the secondary battery sealing device (100).

At this time, a driving part (170), such as a cylinder, is connected to at least one of the first sealing block (112) and the second sealing block (114), which may be provided to be capable of ascending and descending within the main body (100a1). By the driving part (170), the interval between the first sealing block (112) and the second sealing block (114) may be adjusted, and when the bonding target region (S) is pressurized, at least one of the first sealing block (112) and the second sealing block (114) is moved in a direction closer to each other, and the interval between the first sealing block (112) and the second sealing block (114) becomes smaller.

The first sealing block (112) and the second sealing block (114) pressurize a preset bonding target region (S) on the battery cell (101).

Specifically, the battery cell (101) is seated on the first sealing block (112). For example, the lower surface of the bonding target region (S) of the battery cell (101) is seated on the first sealing block (112).

The second sealing block (114) pressurizes the upper surface of the battery cell (101) seated on the first sealing block (112). Specifically, the second sealing block (114) pressurizes the upper surface of the bonding region (S) of the battery cell (101) seated on the first sealing block (112).

As one example, the second sealing block (114) may descend in a direction closer to the first sealing block (112) to pressurize the battery cell (101) seated on the first sealing block (112).

Also, the second sealing block (114) and the first sealing block (112) may pressurize the bonding target region (S) of the battery cell (101) and simultaneously transfer heat to the bonding target region (S).

Here, the first sealing block (112) and the second sealing block (114) may be connected to heating members (161, 162), such as heaters, respectively. Accordingly, the first sealing block (112) and the second sealing block (114) receive heat from the connected heating members (161, 162), respectively, thereby thermally pressurizing the bonding target region (S) of the battery cell (101). The heating members (161, 162) may also be disposed inside each of the sealing blocks (112, 114), and may also be attached to one surface of the sealing blocks (112, 114).

Meanwhile, a pair of lead blocks (120) may be provided on the first sealing block (112) and the second sealing block (114), respectively.

When the bonding target region (S) of the battery cell (101) is pressurized by the first sealing block (112) and the second sealing block (114), the pair of lead blocks (120) are portions for supporting the lead (102) of the battery cell (10) exposed to the outside of the pouch (104).

The pair of lead blocks (120) may comprise a first lead block (122) and a second lead block (124).

The first lead block (122) may be provided on the first sealing block (112). As one example, the first lead block (122) may be formed integrally with the first sealing block (112), and the first lead block (122) may be connected to the first sealing block (112) at a predetermined interval.

**In** addition, the lead (102) of the battery cell (101) seated on the first sealing block (112) is seated on the first lead block (122). Specifically, when the lower surface of the bonding target region (S) of the battery cell (101) is seated on the first sealing block (112), the lower surface of the lead (102) may be seated on the first lead block (122).

A depressed portion (121) for receiving the lead (102) may be formed on the opposing surface (123) of the first lead block (122) facing the second lead block (124).

The opposing surface (123) of the first lead block (122) may be formed to be flat along the edge, except for the region where the depressed portion (121) is formed.

The second lead block (124) may be provided on the second sealing block (114) to face the first lead block (122). As one example, the second lead block (124) may be formed integrally with the second sealing block (114), and the second lead block (124) may be connected to the second sealing block (114) at a predetermined interval.

At this time, unlike the first lead block (122), the entire opposing surface (125) of the second lead block (124) may be formed to be flat.

When the second sealing block (114) descends toward the first sealing block (112) to pressurize the battery cell (101), the second lead block (124) covers the lead (102) seated on the first lead block (122). Specifically, when the second sealing block (114) pressurizes the upper surface of the bonding target region (S) of the battery cell (101), the second lead block (124) surrounds the upper surface of the lead (102).

At this time, the region of the opposing surface (123) of the first lead block (122) except for the depressed portion (121) may be in surface contact with the opposing surface (125) of the second lead block (124) from each other along the edge.

Meanwhile, to receive the lead (102) therein, the depressed portion (121) of the first lead block (122) may be formed to be depressed inward with respect to the opposing surface (121) of the first lead block (122). Therefore, the opposing surface (123) of the first lead block (122) has a step between the edge regions of the depressed portion (121).

In addition, the depressed portion (121) may be formed only in some regions of the first lead block (122). Alternatively, the depressed portion (121) may also be formed in the entire region of the first lead block (122), but to minimize the portion of the lead (102) covered by the first lead block (122) and the second lead block (124) exposed to the atmosphere, it is preferable that the depressed portion (121) is formed only in some regions (e.g., the central region) of the opposing surface (123) excluding the edge.

Referring to Figures 8 and 9, the width (L2) of the depressed portion (121) may be formed to be more than or equal to the width (L1) of the lead (102). Preferably, the width (L2) of the depressed portion (121) may be formed to be larger than the width (L1) of the lead (102) exposed to the outside of the pouch.

For example, the width (L2) of the depressed portion (121) may be formed to be larger than the width (L1) of the lead (102) by about 2mm to 4mm or so, but is not necessarily limited thereto.

In addition, the depth (D2) of the depressed portion (121) may be formed to be more than or equal to the thickness (D1) of the lead (102). Preferably, the depth (D2) of the depressed portion (121) may be formed to be larger than the thickness (D1) of the lead (102) exposed to the outside of the pouch.

For example, the depth (D2) of the depressed portion (121) may be formed to be larger than the thickness (D1) of the lead (102) by about 0.5mm to 1mm or so, but is not limited thereto.

At this time, the pair of lead blocks (120) may be provided with heating members (131, 132), respectively. The heating members (131, 132), such as heaters, may be connected to the first lead block (122) and the second lead block (124), respectively. In such a structure, the first lead block (122) and the second lead block (124) receive heat from the connected heating members (131, 132), respectively, and the lead (102) disposed between the first lead block (122) and the second lead block (124), and the lead film (103) connected to the lead (102) may be heated. The heating members (131, 132) may also be disposed inside each lead block (122, 124), and may also be attached to one surface of each lead block (122, 124).

When the lead (102) with a certain amount of heat is received inside the depressed portion (121), the portion of the lead (102) exposed to the atmosphere by the first lead block (122) and the second lead block (124) is minimized. Accordingly, there is an effect capable of minimizing heat loss of the lead (102).

Meanwhile, only some regions of the lead (102) of the battery cell (101) exposed to the outside of the pouch may be inserted into the depressed portion (121). The lead (102) and the lead film (103) that are not received inside the depressed portion (121) are exposed to the outside of the first lead block (122) and the second lead block (124).

In other words, when the first lead block (122) and the second lead block (124) are in surface contact with each other, both side portions (102a) and end portions (102b) of the lead (102) are inserted inside the depressed portion (121). In this instance, the lead film (103) is provided, the connection portion (102c) of the lead (102) adjacent to the electrode assembly is not located inside the depressed portion (121), and exposed to the outside of the first lead block (122) and the second lead block (124).

The depressed portion (121) has a bottom surface (121b) and a plurality of (for example, three) side portions (121a) connected to the bottom surface (121b). In this instance, when the lead (102) is seated on the bottom surface (121b), two side portions (121a) of the plurality of side portions (121a) face both side portions (102a) of the lead (102), and one side portion (121a) faces the end portion (102b) of the lead (102).

The bonding target region (S) between the lead film (103) and the connection portion (102c) of the lead (102) exposed from the first lead block (122) and the second lead block (124) is thermally pressurized by the first sealing block (112) and the second sealing block (114), and sealed.

In this way, as both side portions (102a) and end portions (102b) of the lead (102) are received inside the first lead block (122) and the second lead block (124) by the depressed portion (121), the remaining surfaces of the lead (102) except for the connection portion (102c), on which the lead film (103) is provided, are not exposed to the atmosphere, so that there is an effect capable of minimizing heat loss of the lead (102).

As described above, an example in which the depressed portion (121) for receiving the lead (102) is formed in the first lead block (122) has been described, but the present invention is not limited thereto, and the depressed portion may be provided on the first lead block and the second lead block, respectively.

At this time, the depressed portion (also referred to as 'first depressed portion') formed in the first lead block and the depressed portion (also referred to as 'second depressed portion') formed in the second lead block may also form together the receiving space for the lead (102).

At this time, the total depth of the depressed portion formed in each lead block (122, 124) may be more than or equal to the thickness of the lead. For example, the thickness of the first depressed portion may be 1/2 or more of the thickness of the lead, and the thickness of the second depressed portion may be 1/2 or more of the thickness of the lead.

The preferred examples of the present invention as described above have been disclosed for illustrative purposes, and those skilled in the art having ordinary knowledge of the present invention will be able to make various modifications, changes, and additions within the scope of the following claims.

### Industrial Applicability

According to the secondary battery sealing device related to one example of the present invention, the portion of the lead exposed to the atmosphere is minimized during the pouch sealing process for the secondary battery, so that the heat loss of the lead can be minimized.

## Claims

1. A secondary battery sealing device for bonding a pouch (104) and a lead film (103) of a battery cell (10, 101), comprising:
a pair of sealing blocks configured to seat the battery cell (10, 101), and configured to pressurize bonding target regions of a pouch (104) and a lead film (103) of the seated battery cell (10, 101); and
a pair of lead blocks (20, 22, 120, 122, 124) configured to seat a lead (102) of the battery cell (10, 101) exposed to the outside of the pouch, and provided to cover the seated lead (102), **characterized in that**
at least one lead block (20, 22, 120, 122, 124) of the pair of lead blocks (20, 22, 120, 122, 124) is provided with a depressed portion (121) for receiving the lead.

2. The secondary battery sealing device according to claim 1, wherein
the pair of lead blocks (20, 22, 120, 122, 124) is provided so that the regions excluding the depressed portion (121) are in contact with each other along the edge of the lead (102).

3. The secondary battery sealing device according to claim 1, wherein
the width of the depressed portion (121) is more than or equal to the width of the lead (102), when the lead (102) is seated in the pair of lead blocks (20, 22, 120, 122, 124).

4. The secondary battery sealing device according to claim 1, wherein
the depth of the depressed portion (121) is more than or equal to the thickness of the lead (102), when the lead (102) is seated in the pair of lead blocks (20, 22, 120, 122, 124).

5. The secondary battery sealing device according to claim 1, wherein
the pair of lead blocks (20, 22, 120, 122, 124) is provided to cover the seated lead (102) when the pair of sealing blocks pressurizes the bonding target regions in a state where the lead (102) is seated.

6. The secondary battery sealing device according to claim 2, wherein
when the lead (102) is received in the depressed portion (121) by the pair of lead blocks (20, 22, 120, 122, 124), the pair of lead blocks (20, 22, 120, 122, 124) is provided to be in surface contact with each other in at least some regions along the edge of the lead (102), excluding the region where the depressed portion (121) is formed.

7. The secondary battery sealing device according to claim 1, wherein
the pair of sealing blocks comprises a first sealing block (12, 112) supporting the lower side of the battery cell (10, 101) so that the battery cell (10, 101) is seated, and a second sealing block (14, 114) pressurizing the battery cell (10, 101) seated on the first sealing block (12, 112) as it moves toward the first sealing block (12, 112), and
the pair of lead blocks (20, 22, 120, 122, 124) comprises a first lead block (22, 23, 122) coupled to the first sealing block (12, 112) so that the lead (102) is seated when the battery cell (10, 101) is seated on the first sealing block (12, 112), and a second lead block (24, 124) provided to cover the lead (102) seated on the first lead block (22, 23, 122) as the second sealing block (14, 114) moves toward the first sealing block (12, 112).

8. The secondary battery sealing device according to claim 7, wherein
the depressed portion (121) is provided in the first lead block (22, 23, 122).

9. The secondary battery sealing device according to claim 7, wherein
the width of the depressed portion (121) is more than or equal to the width of the lead (102), when the lead (102) is seated in the pair of lead blocks (20, 22, 120, 122, 124).

10. The secondary battery sealing device according to claim 7, wherein
the depth of the depressed portion (121) is more than or equal to the thickness of the lead (102), when the lead (102) is seated in the pair of lead blocks (20, 22, 120, 122, 124).

11. The secondary battery sealing device according to claim 10, wherein
when the lead (102) is covered by the second lead block (24, 124), the respective opposing surfaces of the first lead block (22, 23, 122) and the second lead block (24, 124) are provided to be in surface contact with each other along the edge of the lead (102), excluding the region where the depressed portion (121) is formed.

12. The secondary battery sealing device according to claim 11, wherein
the lead (102) and the lead film (103) exposed to one open surface of the depressed portion (121) are pressurized by the first and second sealing blocks (14, 114).

13. The secondary battery sealing device according to claim 7, wherein
the depressed portion (121) is provided in each of the first lead block (22, 23, 122) and the second lead block (24, 124), and
the total depth of the depressed portion (121) formed in each lead block (20, 22, 120, 122, 124) is more than or equal to the thickness of the lead (102), when the lead (102) is seated in the pair of lead blocks (20, 22, 120, 122, 124).

14. The secondary battery sealing device according to claim 1, wherein
the pair of lead blocks (20, 22, 120, 122, 124) is provided with heating members, respectively.

## Patentansprüche

1. Siegelvorrichtung für eine Sekundärbatterie zum Verbinden eines Pouchs (104) und eines Ableiterfilms (103) einer Batteriezelle (10, 101), umfassend:
ein Paar von Siegelblöcken, das dazu eingerichtet ist, die Batteriezelle (10, 101) aufzunehmen, und dazu eingerichtet ist, zu verbindende Bereiche eines Pouchs (104) und eines Ableiterfilms (103) der aufgenommenen Batteriezelle (10, 101) mit Druck zu beaufschlagen; und
ein Paar von Ableiterblöcken (20, 22, 120, 122, 124), das dazu eingerichtet ist, einen Ableiter (102) der Batteriezelle (10, 101), der zur Außenseite des Pouchs freiliegt, aufzunehmen, und dazu vorgesehen ist, den aufgenommenen Ableiter (102) abzudecken, **dadurch gekennzeichnet, dass**
mindestens ein Ableiterblock (20, 22, 120, 122, 124) des Paars von Ableiterblöcken (20, 22, 120, 122, 124) mit einem Vertiefungsabschnitt (121) zum Aufnehmen des Ableiters versehen ist.

2. Die Siegelvorrichtung für eine Sekundärbatterie nach Anspruch 1, wobei
das Paar von Ableiterblöcken (20, 22, 120, 122, 124) so vorgesehen ist, dass die Bereiche mit Ausnahme des Vertiefungsabschnitts (121) entlang des Randes des Ableiters (102) miteinander in Kontakt stehen.

3. Die Siegelvorrichtung für eine Sekundärbatterie nach Anspruch 1, wobei
die Breite des Vertiefungsabschnitts (121) größer als oder gleich der Breite des Ableiters (102) ist, wenn der Ableiter (102) in dem Paar von Ableiterblöcken (20, 22, 120, 122, 124) aufgenommen ist.

4. Die Siegelvorrichtung für eine Sekundärbatterie nach Anspruch 1, wobei
die Tiefe des Vertiefungsabschnitts (121) größer als oder gleich der Dicke des Ableiters (102) ist, wenn der Ableiter (102) in dem Paar von Ableiterblöcken (20, 22, 120, 122, 124) aufgenommen ist.

5. Die Siegelvorrichtung für eine Sekundärbatterie nach Anspruch 1, wobei
das Paar von Ableiterblöcken (20, 22, 120, 122, 124) dazu vorgesehen ist, den aufgenommenen Ableiter (102) abzudecken, wenn das Paar von Siegelblöcken die zu verbindenden Bereiche in einem Zustand, in dem der Ableiter (102) aufgenommen ist, mit Druck beaufschlagt.

6. Die Siegelvorrichtung für eine Sekundärbatterie nach Anspruch 2, wobei,
wenn der Ableiter (102) durch das Paar von Ableiterblöcken (20, 22, 120, 122, 124) in dem Vertiefungsabschnitt (121) aufgenommen ist, das Paar von Ableiterblöcken (20, 22, 120, 122, 124) dazu vorgesehen ist, in mindestens einigen Bereichen entlang des Randes des Ableiters (102), mit Ausnahme des Bereichs, in dem der Vertiefungsabschnitt (121) ausgebildet ist, miteinander in Flächenkontakt zu stehen.

7. Die Siegelvorrichtung für eine Sekundärbatterie nach Anspruch 1, wobei
das Paar von Siegelblöcken einen ersten Siegelblock (12, 112), der die Unterseite der Batteriezelle (10, 101) stützt, so dass die Batteriezelle (10, 101) aufgenommen ist, und einen zweiten Siegelblock (14, 114) umfasst, der die auf dem ersten Siegelblock (12, 112) aufgenommene Batteriezelle (10, 101) mit Druck beaufschlagt, während er sich auf den ersten Siegelblock (12, 112) zu bewegt, und
das Paar von Ableiterblöcken (20, 22, 120, 122, 124) einen ersten Ableiterblock (22, 23, 122), der mit dem ersten Siegelblock (12, 112) gekoppelt ist, so dass der Ableiter (102) aufgenommen ist, wenn die Batteriezelle (10, 101) auf dem ersten Siegelblock (12, 112) aufgenommen ist, und einen zweiten Ableiterblock (24, 124) umfasst, der dazu vorgesehen ist, den auf dem ersten Ableiterblock (22, 23, 122) aufgenommenen Ableiter (102) abzudecken, während sich der zweite Siegelblock (14, 114) auf den ersten Siegelblock (12, 112) zu bewegt.

8. Die Siegelvorrichtung für eine Sekundärbatterie nach Anspruch 7, wobei
der Vertiefungsabschnitt (121) in dem ersten Ableiterblock (22, 23, 122) vorgesehen ist.

9. Die Siegelvorrichtung für eine Sekundärbatterie nach Anspruch 7, wobei
die Breite des Vertiefungsabschnitts (121) größer als oder gleich der Breite des Ableiters (102) ist, wenn der Ableiter (102) in dem Paar von Ableiterblöcken (20, 22, 120, 122, 124) aufgenommen ist.

10. Die Siegelvorrichtung für eine Sekundärbatterie nach Anspruch 7, wobei
die Tiefe des Vertiefungsabschnitts (121) größer als oder gleich der Dicke des Ableiters (102) ist, wenn der Ableiter (102) in dem Paar von Ableiterblöcken (20, 22, 120, 122, 124) aufgenommen ist.

11. Die Siegelvorrichtung für eine Sekundärbatterie nach Anspruch 10, wobei,
wenn der Ableiter (102) durch den zweiten Ableiterblock (24, 124) abgedeckt ist, die jeweiligen einander gegenüberliegenden Oberflächen des ersten Ableiterblocks (22, 23, 122) und des zweiten Ableiterblocks (24, 124) dazu vorgesehen sind, entlang des Randes des Ableiters (102), mit Ausnahme des Bereichs, in dem der Vertiefungsabschnitt (121) ausgebildet ist, miteinander in Flächenkontakt zu stehen.

12. Die Siegelvorrichtung für eine Sekundärbatterie nach Anspruch 11, wobei
der Ableiter (102) und der Ableiterfilm (103), die zu einer offenen Oberfläche des Vertiefungsabschnitts (121) freiliegen, durch den ersten und den zweiten Siegelblock (14, 114) mit Druck beaufschlagt werden.

13. Die Siegelvorrichtung für eine Sekundärbatterie nach Anspruch 7, wobei
der Vertiefungsabschnitt (121) jeweils in dem ersten Ableiterblock (22, 23, 122) und dem zweiten Ableiterblock (24, 124) vorgesehen ist, und
die Gesamttiefe des in jedem Ableiterblock (20, 22, 120, 122, 124) ausgebildeten Vertiefungsabschnitts (121) größer als oder gleich der Dicke des Ableiters (102) ist, wenn der Ableiter (102) in dem Paar von Ableiterblöcken (20, 22, 120, 122, 124) aufgenommen ist.

14. Die Siegelvorrichtung für eine Sekundärbatterie nach Anspruch 1, wobei
das Paar von Ableiterblöcken (20, 22, 120, 122, 124) jeweils mit Heizelementen versehen ist.

## Revendications

1. Dispositif d'étanchéité de batterie rechargeable destiné à lier une poche (104) et un film pour fil (103) d'un élément de batterie (10, 101), comprenant :
une paire de blocs d'étanchéité configurés pour caler l'élément de batterie (10, 101), et configurés pour pressuriser des régions cibles de liaison d'une poche (104) et un film pour fil (103) de l'élément de batterie calé (10, 101) ; et
une paire de blocs de fil (20, 22, 120, 122, 124) configurés pour caler un fil (102) de l'élément de batterie (10, 101) exposé à l'extérieur de la poche, et fournis pour recouvrir le fil calé (102), **caractérisé en ce que**
un ou plusieurs blocs de fil (20, 22, 120, 122, 124) de la paire de blocs de fil (20, 22, 120, 122, 124) sont munis d'une partie renfoncée (121) pour recevoir le fil.

2. Dispositif d'étanchéité de batterie rechargeable selon la revendication 1, dans lequel
la paire de blocs de fil (20, 22, 120, 122, 124) est fournie de sorte que les régions excluant la partie renfoncée (121) sont en contact les unes avec les autres le long du bord du fil (102).

3. Dispositif d'étanchéité de batterie rechargeable selon la revendication 1, dans lequel
la largeur de la partie renfoncée (121) est égale ou supérieure à la largeur du fil (102), quand le fil (102) est calé dans la paire de blocs de fil (20, 22, 120, 122, 124).

4. Dispositif d'étanchéité de batterie rechargeable selon la revendication 1, dans lequel
la profondeur de la partie renfoncée (121) est égale ou supérieure à l'épaisseur du fil (102), quand le fil (102) est calé dans la paire de blocs de fil (20, 22, 120, 122, 124).

5. Dispositif d'étanchéité de batterie rechargeable selon la revendication 1, dans lequel
la paire de blocs de fil (20, 22, 120, 122, 124) est fournie pour recouvrir le fil calé (102) quand la paire de blocs d'étanchéité pressurise les régions cibles de liaison dans un état où le fil (102) est calé.

6. Dispositif d'étanchéité de batterie rechargeable selon la revendication 2, dans lequel
quand le fil (102) est reçu dans la partie renfoncée (121) par la paire de blocs de fil (20, 22, 120, 122, 124), la paire de blocs de fil (20, 22, 120, 122, 124) est fournie pour être en contact de surface l'un avec l'autre dans une ou plusieurs régions le long du bord du fil (102), excluant la région où la partie renfoncée (121) est formée.

7. Dispositif d'étanchéité de batterie rechargeable selon la revendication 1, dans lequel
la paire de blocs d'étanchéité comprend un premier bloc d'étanchéité (12, 112) soutenant la partie inférieure de l'élément de batterie (10, 101) de sorte que l'élément de batterie (10, 101) est calé, et un deuxième bloc d'étanchéité (14, 114) pressurisant l'élément de batterie (10, 101) calé sur le premier bloc d'étanchéité (12, 112) lorsqu'il se déplace vers le premier bloc d'étanchéité (12, 112), et
la paire de blocs de fil (20, 22, 120, 122, 124) comprend un premier bloc de fil (22, 23, 122) couplé au premier bloc d'étanchéité (12, 112) de sorte que le fil (102) est calé quand l'élément de batterie (10, 101) est calé sur le premier bloc d'étanchéité (12, 112), et un deuxième bloc de fil (24, 124) fourni pour recouvrir le fil (102) calé sur le premier bloc de fil (22, 23, 122) lorsque le deuxième bloc d'étanchéité (14, 114) se déplace vers le premier bloc d'étanchéité (12, 112).

8. Dispositif d'étanchéité de batterie rechargeable selon la revendication 7, dans lequel
la partie renfoncée (121) est fournie dans le premier bloc de fil (22, 23, 122).

9. Dispositif d'étanchéité de batterie rechargeable selon la revendication 7, dans lequel
la largeur de la partie renfoncée (121) est égale ou supérieure à la largeur du fil (102), quand le fil (102) est calé dans la paire de blocs de fil (20, 22, 120, 122, 124).

10. Dispositif d'étanchéité de batterie rechargeable selon la revendication 7, dans lequel
la profondeur de la partie renfoncée (121) est égale ou supérieure à l'épaisseur du fil (102), quand le fil (102) est calé dans la paire de blocs de fil (20, 22, 120, 122, 124).

11. Dispositif d'étanchéité de batterie rechargeable selon la revendication 10, dans lequel
quand le fil (102) est recouvert par le deuxième bloc de fil (24, 124), les surfaces opposées respectives du premier bloc de fil (22, 23, 122) et du deuxième bloc de fil (24, 124) sont fournies pour être en contact de surface l'une avec l'autre le long du bord du fil (102), excluant la région où la partie renfoncée (121) est formée.

12. Dispositif d'étanchéité de batterie rechargeable selon la revendication 11, dans lequel
le fil (102) et le film pour fil (103) exposés à une surface ouverte de la partie renfoncée (121) sont pressurisés par les premier et deuxième blocs d'étanchéité (14, 114).

13. Dispositif d'étanchéité de batterie rechargeable selon la revendication 7, dans lequel
la partie renfoncée (121) est fournie dans le premier bloc de fil (22, 23, 122) et dans le deuxième bloc de fil (24, 124), et
la profondeur totale de la partie renfoncée (121) formée dans chaque bloc de fil (20, 22, 120, 122, 124) est égale ou supérieure à l'épaisseur du fil (102), quand le fil (102) est calé dans la paire de blocs de fil (20, 22, 120, 122, 124).

14. Dispositif d'étanchéité de batterie rechargeable selon la revendication 1, dans lequel
la paire de blocs de fil (20, 22, 120, 122, 124) est munie d'éléments de chauffage, respectivement.
